# EUROPEAN PATENT SPECIFICATION

(11) **EP 1 368 216 B1**
(45) Date of publication and mention of the grant of the patent: **07.12.2005**
(21) Application number: 02708046.4
(22) Date of filing: 04.03.2002
(51) Int. Cl.: B60T 7/10

(54) **BRAKE CONTROL DEVICE ON STEERING WHEEL**
BREMSSTEUERVORRICHTUNG AM LENKRAD
DISPOSITIF DE COMMANDE DE FREINAGE AU VOLANT

(30) Priority: 02.03.2001 CA 2339740
(43) Date of publication of application: 10.12.2003
(73) Proprietor: Group Newtech International Inc., Blainville, Quebec J7C 3V3 (CA)
(72) Inventor: RANCOURT, Yvon, Lorraine, Québec J6Z 4N2 (CA); CONSTANS, Alain, Terrebonne, Québec J6Y 1C9 (CA); EL-HAOUARI, M'hamed, Montreal, Québec H2A 2P6 (CA)
(74) Representative: Dossmann, Gérard
(86) International application number: PCT/CA2002/000269
(87) International publication number: WO 2002/070310

(56) References cited:
- EP-A- 1 078 831
- WO-A-01/66392
- US-A- 4 078 628
- US-A- 5 335 743

## Description

This invention relates to an improved car braking system. More specifically, it is concerned with a steering wheel mounted braking control device.

Optimized braking in performance sports cars is a vital part of both road safety and racetrack success. Response time of the driver can significantly affect the braking distance required to efficiently slow a fast moving vehicle. Fractions of seconds could potentially mean the difference between stopping in time and having an accident. The traditional braking method used in most cars today is the foot activated pedal brake. While this is a reliable method, and is effective because of the strong force that can be exerted on the mechanical brake pedal by the driver, moving a foot over to the brake pedal and pushing down on the mechanical brake linkage requires significant time in the would of auto racing. The fractions of a second lost are costly in a sport where everything is scrutinized in order to save valuable time. With the present steering wheel-mounted brake activation system, less time would be lost between the driver's initial reaction and the application of the brakes.

It is well known that the eye-hand coordination is faster than the eye-foot coordination. A brake control operated by the hand, on the steering hand would have some distinct advantages in respect of response time as opposed to a foot-pedal control.

Existing prior art in this field is generally concerned with hand operated vehicle control devices for handicapped uses. Most comprise mechanical devices of varying complexities for operating the accelerator and brake pedals remotely by hand from the steeling wheel or column.

U.S. Patent 5,666,857 issued September 16, 1997 to Sebazco discloses a motor vehicle steering and braking control system. A mechanism fixed between the steering wheel and the brake pedal allows the brake pedal to be depressed when the operator exerts a downward force on the steering wheel.

U.S. Patent 4,078,628 issued March 14, 1978 to Reichenberger discloses an hand operated antomotive control system which is capable of operating both the throttle and braking systems through an electro-hydraulic servo system. The device includes a control wheel, concentrically mounted within the conventional steering wheel, which is connected to a position sensor detecting the relative position of the plane of the second control wheel relative to the steering wheel. The sensor output signal is amplified and sent to a torque motor which controls the position of a linear actuator. Movement of the linear actuator in one direction applies pressure to the brake system, and in the other increases the throttle setting. Therefore, movement of the control wheel away from the driver activates the vehicles brakes, and movement towards the driver activates the throttle.

U.S. Patent 5,603,674 issued February 18, 1997 to Rivas et al. and Canadian Patent 2,130,334 issued August 3, 1999 to Rivas both disclose a set of motor vehicle controls for assisting drivers handicapped in the lower limbs, comprising controls for the accelerator, brake and clutch, and a plurality of motors, each controlling a pedal assembly. The control for the brake and accelerator are located on the steering wheel, comprising a freely rotating internal hoop bearing two concentric annular sensors for the brake and accelerator. A second set of controls, independent of the steering wheel, is used for controlling the clutch and the brake.

U.S. Patent 4,077,487 issued March 7, 1978 to Misinchuk and corresponding Canadian Patent 1,049,590 issued February 27, 1979 to the same inventor, disclose an auxiliary braking system for a vehicle comprised of a steering wheel mounted control switch which is electrically connected to a linear motor linked to the control rod of the braking vehicle braking system. This permits the driver to apply and free the brakes of the vehicle by sliding the switch on the steering wheel with a thumb or finger of his hand.

U.S. Patent 5,025,905 issued June 25, 1991 to Lenz and Canadian Patent 1,320,413 issued July 27, 1993 to the same inventor, disclose a hand control device for operating both the accelerator and brake pedals of a motor vehicle. This invention comprises a lever mechanism which purhes down on an accelerator pedal control member when rotated in one, direction, and pushes down on a brake pedal control member when rotated other direction.

U.S. Patent 5,129,492 issued July 14, 1992 to Lenz discloses a device similar to U.S. Patent 5,025,905 having additionally a flexible support loop passing around the vehicle steering column for receiving and supporting one of the control members.

U.S. Patent 5,335,743 issued August 9,1994 to Gillbrand et el. discloses a steering wheel comprising spokes and a control mounted on top of one of the spokes and being tiltable in four directions arranged in opposite pairs of directions in a plane parallel to the plane of the steering wheel. The control comprises a tetrahedral button comprising four thumb grips corresponding to the four directions, an arm extending downward from the button into a cavity provided in an upper surface of said one of the spokes and comprising an upper and a lower arm portion, as well as a strain gauge mounted on the upper arm. The vehicle is also equipped with a brake servo adapted to control operation of brakes. When the signal from sensor exceeds a reference value, a control unit actuates the brake servo so that a braking force is applied to the front and rear wheels of the vehicle. Pressure is applied by a user in a direction parallel to the plane of the steering wheel to the thumb grips of the tetrahedral button. The steering wheel does not comprise a pressure plate nor a localized force transmission member fixed to the pressure plate, which member transmits the force from the pressure plate to a deflectable member.

International patent application WO 01/66392 filed on March 5, 2001 in the name of Corporation Do Frein Newtech, Inc. (Canada) discloses a device for controlling the braking of vehicle having a brake system, the device comprising a steering wheel comprising a rim mounted to a steering column by spokes converging at a hub portion, a pair of opposed lever plates mounted to the hub portion, and strain gauge sensors mounted respectively to the lever plates and electrically wired to a processing unit. A deformation of the lever plates is picked up by the strain gauge sensors, which will generate braking torque through the processing unit. To actuates this brake system, a user puts his hand on the rim and pulls at least one of the lever plates toward himself using fingers of his hand extending beyond the rim. This device comprises a pulling lever rather than a pressure plate. The strain gauge sensor is mounted to the lever plate and picks up the deformation of the lever plate itself. However, this braking device does not comprise a localized force transmission member fixed to a pressure plate and adapted to transmit the force from the pressure plate to a deflectable member.

European Patent Application EP 1 078 831 A2 discloses a steering wheel comprising three spokes as well as yaw moment booster switches provided on the front sides of the horizontal spokes and being push-button type switches, allowing to apply brake pressure separately to left and right wheels. The steering wheel does not comprise a pressure plate to which pressure plate an actuating force is applied, nor a localized force transmission member fixed to the pressure plate and adapted to transmit force from the pressure plate to the deflectable member.

Therefore, while a significant amount of prior art exists for hand activated automotive brake controls, most employ connection directly attached to the brake pedal. This type of system is often complex and takes up considerable space. The actuation of this type of mechanical system often requires levers to be pulled or pushed, and therefore a hand must be removed from the steering wheel in order to actuate the braking system. This both slows braking reaction time, and means that steering is negatively affected when braking is required. This can be dangerous when situations arise which require the drive to simultaneously slow down and avoid an obstacle or other vehicle. The few prior art braking systems which utilize electrical signals, nevertheless require hydro-mechanical serves or motors which translate a displacement of a steering wheel mounted switch into displacement of the brakes. These types of systems often require significant skill to control the wheel mounted switches, as they must be accurately displaced by an amount which corresponds to the level of braking required. This movement of the wheel mounted switch also takes mote time which reduces the overall time between the driver reaction and the brake application.

It is an object of the present invention to provide an improved vehicle braking activation system.

It is a further object of the present invention to provide a hand operated, steering wheel-mounted, braking control system providing faster response time, without negatively affecting vehicle steering control.

Therefore, in accordance with the present invention, as claimed in claim 1, a steering wheel mounted vehicle braking actuation system, which is adapted for use with a braking controller capable of accepting electrical input signals and controlling brake activation accordingly, comprises a pressure plate mounted on the steering wheel of the vehicle, to which pressure plate an actuating force is applied by a user; an elastically deflectable member mounted within the steering wheel of the vehicle and adapted to be deflected by the actuating force ; an electrical strain gauge sensor fixed to the deflectable member and providing an electrical output signal in response to the actuating force applied, whereby the electrical output signal provides a direct input to the braking controller.

According to the invention, the braking actuation system further comprises a localized force transmission member fixed to the pressure plate and adapted to transmit the force from the pressure plate to the deflectable member.

In accordance with the present invention, as claimed in claim 10, a method of brake actuation for a vehicle comprises the steps of: exerting an actuating force on a pressure plate mounted on a steering wheel of the vehicle; transmitting the actuating force from the pressure plate to an elastically deflectable sensing member by means of a localized force transmission member; detecting a deflection of the elastically deflectable sensing member with a strain gauge sensor fixed thereto; providing an electrical output signal from the strain gauge sensor in proportional response to the deflection of the elastically deflectable sensing member; and transmitting the electrical output signal directly to a vehicle braking activation element.

These objects and the present invention will become fully apparent by referring to the following non-limiting detailed description of the preferred embodiments, claims, and the accompanying drawings, in which:
Figure 1 is an exploded perspective view of the brake control assembly;
Figure 2 is a rear perspective view of the brake control assembly;
Figure 3a is a horizontal elevational view of the brake control device without the steering wheel;
Figure 3b is a schematic view showing an exaggerated deflection of the sensing beam;

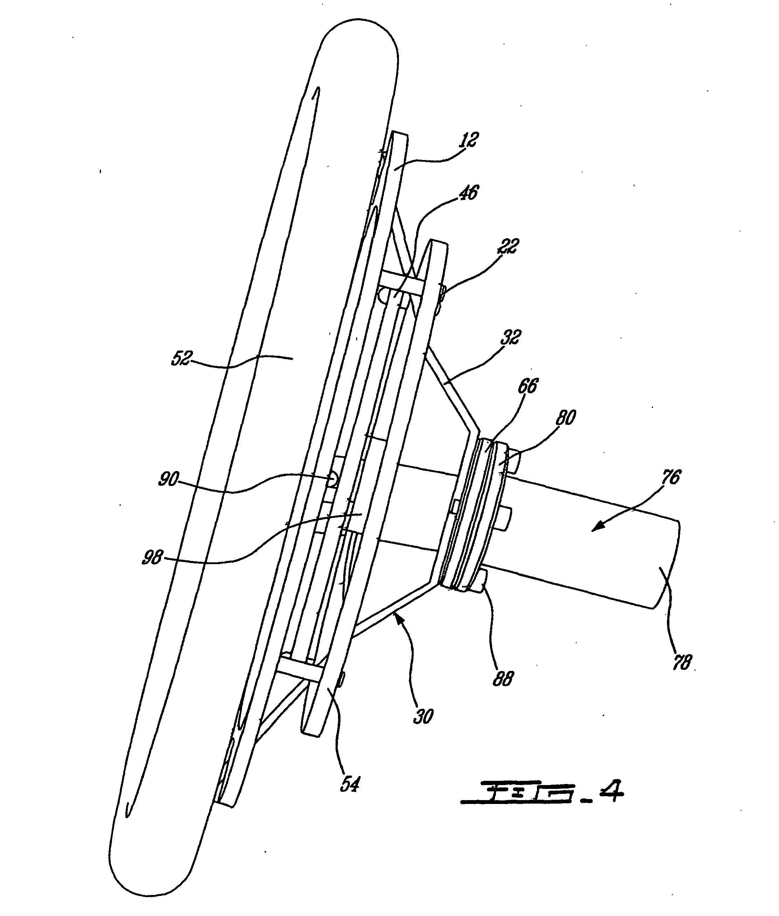

Figure 4 is a side perspective view of the brake control assembly;

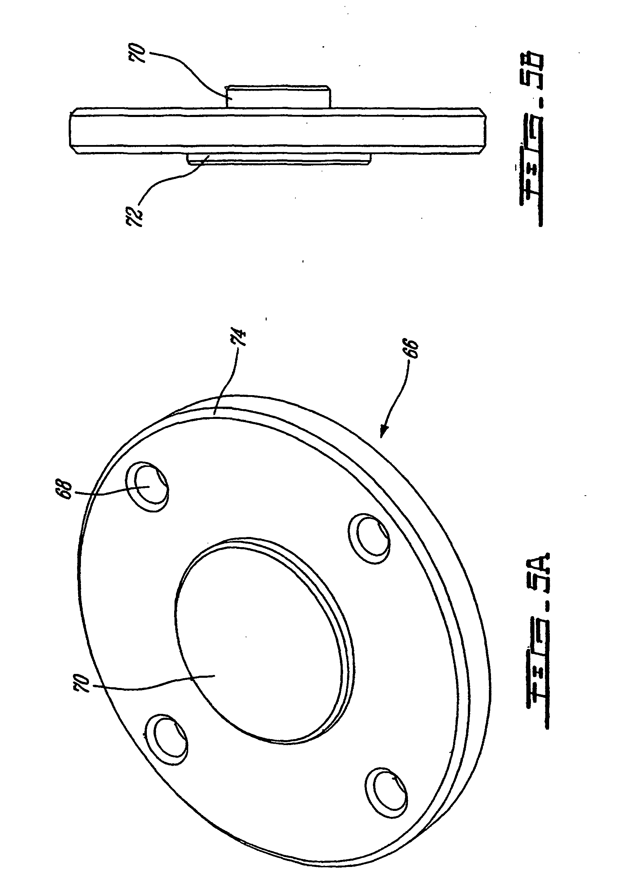

Figure 5a is a perspective view of the steering column mating flange;
Figure 5b is a side elevational view of the detail shown in Figure 5a;

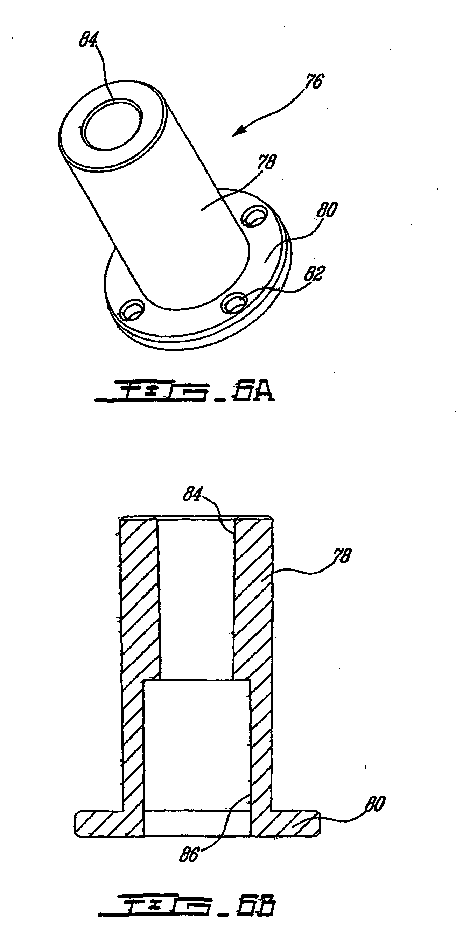

Figure 6a is a perspective view of the sboecaing column adapter pivot;
Figure 6b is a partial axial cross-sectional view of the detail shown in Figure 6a; and

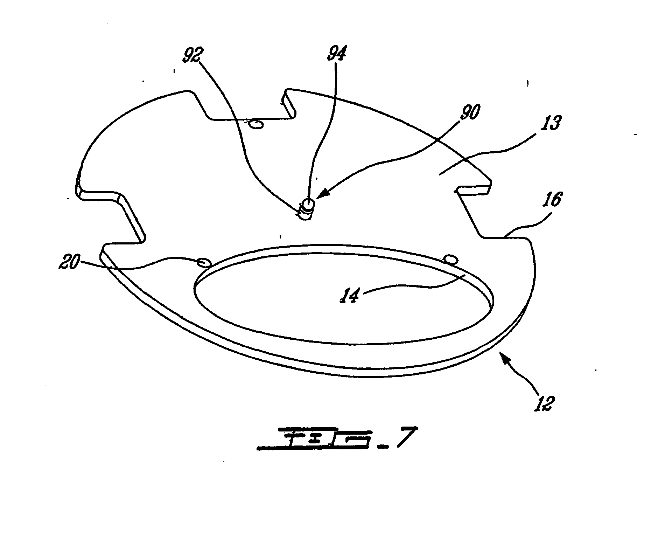

Figure 7 is a perspective view of the underside of the traking interface pressure plate.

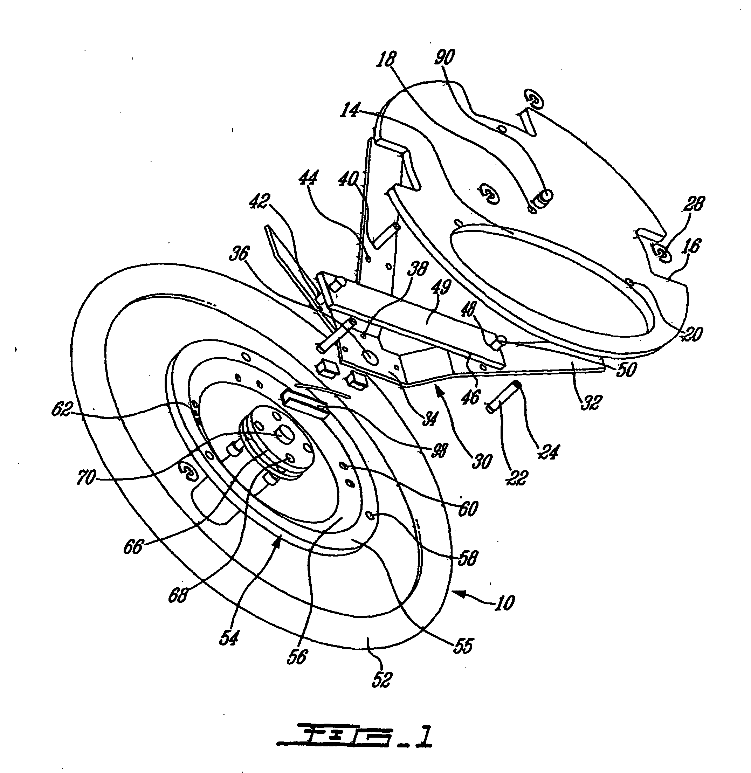

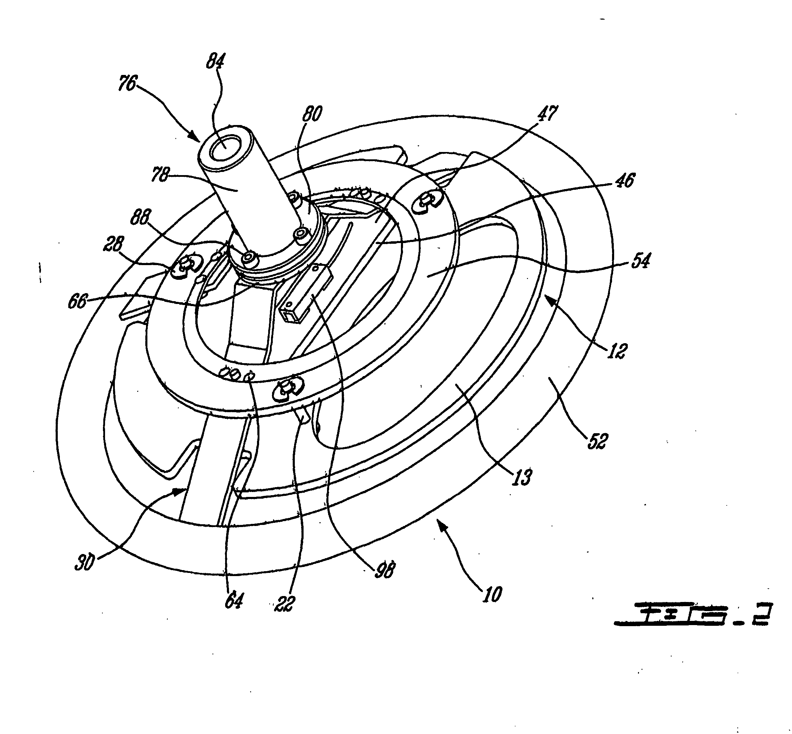

Referring now to Figs. 1 and 2 of the brake control assembly device 10, a generally circular braking interface pressure plate 12 is shown mounted on a steering wheel. The plate 12 defines a lower oval cut-out region 14, three radially located rectangular cut-outs 16 for spoke clearance spaced at 90° from each other, a circular centre hole 18 and three dowel pin boles 20 equally spaced 120° apart. The braking interface pressure plate 12 can equally be modified to be of varions shapes, in order to accommodate the most effective and ergonomic design. A central end ball 90 fits into the centre hole 18 and protrudes from the lower surface 13 of the pressure plate 12. Dowel pins 22 retain the pressure plate 12, and permit slideable translation when the driver's fingers or hands depress the plate. The annular circumferential slots 24 on either and of the dowel pins 22 for reception of the C-clip fasteners 28, retain the dowel pins 22 in place, ensure contact between the end ball 90 and the sensing beam 46, and prevent the disassembly of the entire device. The dowel pius 22 descend down through the bolis 58 in the support ring 54 which is fixed to the spokes 32 of the spoke element 30.

The spoke element 30 is comprised of the three spokes 32 spaced at 90° from each other. The T-shaped base plate 34 has a large circular centre hole 36 and three smaller circular threaded holes 38. All three spokes each have two support ring fastener holes 44. The two laterally opposing spokes 32 also include two sensing beam fastener holes 44. The remaining upwardly extending spoke includes a single dowel pin hole 40. The central end ball 90 protruding from the lower surface 13 of the pressure plate 12 rests on the top surface 49 of the rectangular sensing beam 46, which itself is fixed by two beam fastener pins 50 onto the laterally opposing spokes 32.

Referring also to Fig. 2, the steering wheel rim 52 is fixed to the ends of the spokes 32. The pressure plate support ring 54 is fixed to the underside of the spokes 32 by six spoke fastener pins 64 through the spoke fastener holes 60. The support ring 54 has a chamfered inside surface 56 for mating with the undersides of the spokes 32. This permits the flat top surface 55 of the support ring 54 to remain parallel to the pressure plate 12. Therefore ensuring that the dowel pin holes 58 allow the pins 22 to be perpendicular to both the top surface 55 of the support ring 54 and the under surface 13 of the pressure plate 12. This ensures that the pressure plate 12 can slide freely on the dowel pins 22, and that the force applied to the top of the pressure plate 12 will cause the end ball 90 to deflect the rectangular sensing beam 46 in an amount proportional to the force applied to the pressure plate 12 by the driver.

A strain gange sensor 98 is fixed to the under surface 47 of the rectangular sensing beam 46. This sensor measures the strain in the sensing beam 46 created by the centralized force applied to it by the end ball 90 mounted to the pressure plate 12. The entire assembled spoke element 30 to which the steering wheel rim 52, pressure plate support ring 54 and sensing beam 46 are also attached, is fixed to the vehicle steering shaft by a steering column mating flange 66 and a steering column adapter pivot 76.

The steering column mating flange 66 comprises four radial equally spaced cap screw holes 68, a top circular boss 70, a bottom circular boss 72 of larger diameter, and circumferential edge chamfers 74. The T-shaped base plate 34 of the spoke element 30 meets with the steering column mating flange 66. They are radially aligned by the top circular boss 70 of the column mating flange 66 fitting into the large circular centre hole 36 in the T-shaped base plate 34 of the spoke elements 30. The larger diameter bottom circular boss 72 of the steering column mating flange 66 protrudes into the centre axial hole 86 in the top radial flange 80 of the steering column adapter pivot 76, thereby radially aligning the entire brake control assembly 10.

The four cap screw holes 82 in the top radial flange 80 of the adapter pivot 76, can them be aligned with the four cap screw holes 68 of the mating flange 66, and the three threaded cap screw holes 38 of the T-shaped base plate 34 of the spoke element 30. The cap screws 88 then provide the axial fixation of all the elements of the brake control assembly 10. The smaller diameter centre axial through hole 84 of the cylindrical body 78 in the steering column adapter pivot 76, is intended for slideable mating with and fixation onto the end of the steering column shaft of the vehicle.

The entire invention therefore is a brake activation device, for an electronic braking system. When the driver applies force on the pressure plate 12, the transferred force concentrated at the centre through the and ball 90 and onto the deformable sensing beam 46, provides the mechanical input which the strain gauge sensor 98.

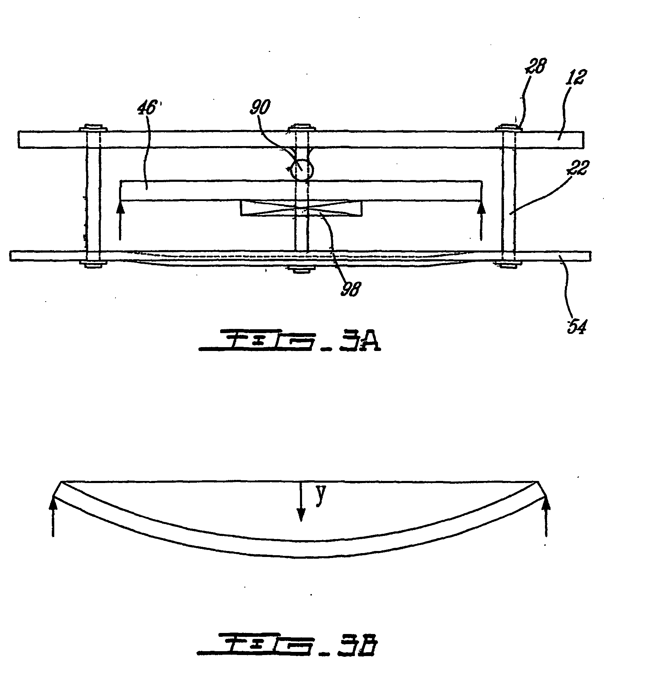

Referring to Figure 3, the amount of deformation Y of the sensing beam 46 is detected by the attached strain gange sensor 98, which transmits a corresponding electrical signal equivalent to the degree of strain in the sensing beam 46, to a separate braking controller which would manage the input signals and proportionally control the braking according. The output of the stain gauge sensor 98 could also be amplified or reduced according to need and braking calibration required. Therefore, the force applied to the pressure plate 12 by the driver and picked up by the strain gauge sensor 98, would be electronically sent directly to the brakes. This eliminates the slower traditional mechanical braking system movements and slower physical movements required by the driver for applying a foot brake pedal, and therefore reduces reaction time and permits faster brake application.

Although the preferred embodiment of the present invention has been described in the foregoing specification in detail, it is to be understood that modifications may be made to the invention without departing from the scope of this invention as defined by the appended claims.

## Claims

1. A steering wheel mounted vehicle braking actuation system (10) adapted for use with a braking controller capable of accepting electrical input signals and controlling brake activation accordingly, comprising:
an elastically deflectable member (46) mounted within the steering wheel of the vehicle, and adapted to be deflected by the actuating force
an electrical strain gauge sensor (98) fixed to the deflectable member (46) and providing an electrical output signal in response to the actuating force applied,
whereby the electrical output signal provides a direct input to the braking controller;
**characterized by** further comprising a pressure plate (12) mounted on the steering wheel of the vehicle such that the actuating force is applicable thereto by a user, and a localized force transmission member (90) fixed to the pressure plate (12) and adapted to transmit the force from the pressure plate (12) to the deflectable member (46).

2. The braking actuation system as defined in claim 1, wherein the pressure plate is a hand actuated pressure plate (12) which is contiguous with the elastically deflectable member (46).

3. The braking actuation system as defined in claim 1 or 2, wherein the electrical output signal is substantially proportional to the actuating force applied.

4. The braking actuation system as defined in anyone of claims 1 to 3 wherein the braking controller is discrete and adapted to apply a vehicle braking force proportional to the electrical output signal.

5. The braking actuation system as defined in anyone of the preceding claims, wherein the hand actuated pressure plate (12) can be actuated without releasing the steering wheel.

6. The braking actuation system as defined in anyone of the claims 2 to 5, wherein the hand actuated pressure plate (12) displaces an amount substantially corresponding to an amount of deflection of said elastically deflectable member (46).

7. The braking actuation system as defined in anyone of the preceding claims, wherein the electrical output signal produced by the strain gauge sensor (98) is substantially proportional to an amount of defection of the elastically deflectable member (46).

8. The braking actuation system as defined in anyone of the preceding claims, wherein the elastically deflectable member (46) is a beam fixed at its ends.

9. The braking actuation system as defined in claim 8, wherein the localized force transmission member (90) acts substantially at the middle of the beam (46).

10. A method of brake actuation for a vehicle comprising the steps of:
exerting an actuating force on a pressure plate (12) mounted on a steering wheel of the vehicle;
transmitting the actuating force from the pressure plate (12) to an elastically deflectable sensing member (46) by means of a localized force transmission member (90);
detecting a deflection of the elastically deflectable sensing member (46) with a strain gauge sensor (98) fixed thereto;
providing an electrical output signal from the strain gauge sensor (98) in proportional response to the deflection of the elastically deflectable sonsins member (46); and
transmitting the electrical output signal directly to a vehicle braking activation element.

## Patentansprüche

1. Ein an einem Lenkrad montiertes Fahrzeugbremsen-Betätigungssystem (10), angepasst zur Verwendung mit einer Bremsen-Steuereinheit, die dazu in der Lage ist, elektrische Eingangssignale zu empfangen und eine Bremsaktivierung entsprechend zu steuern, umfassend:
ein elastisch ablenkbares bzw. biegbares Element (46), das innerhalb des Lenkrads des Fahrzeugs montiert und dazu angepasst ist, durch die Betätigungskraft abgelenkt bzw. gebogen zu werden; einen elektrischen Spannungsprüfsensor bzw. Spannungsmessstreifen (98), der an dem biegbaren Element (46) befestigt ist und der ein elektrisches Ausgangssignal bereitstellt in Antwort auf die aufgebrachte Betätigungskraft, wobei das elektrische Ausgangssignal einen direkten Eingang zu der Bremsen-Steuereinheit bereitstellt;
**gekennzeichnet durch** ferner umfassen einer auf dem Lenkrad des Fahrzeugs montierten Druckplatte (12), so dass die Betätigungskraft darauf **durch** einen Benutzer aufbringbar ist, und ein an der Druckplatte (12) befestigtes Übertragungselement(90) für eine örtlich begrenzte Kraft, wobei das Übertragunselement dazu angepasst ist, die Kraft von der Druckplatte (12) auf das biegbare Element (46) zu übertragen.

2. Das Bremsen-Betätigungssystem nach Anspruch 1, wobei die Druckplatte eine von Hand betätigte Druckplatte (12) ist, wie zu dem elastischen biegbaren Element (46) benachbart bzw. angrenzend ist.

3. Das Bremsen-Betätigungssystem nach Anspruch 1 oder 2, wobei das elektrische Ausgangssystem im wesentlichen proportional zu der aufgebrachten Betätigungskraft ist.

4. Das Bremsen-Betätigungssystem nach einem der Ansprüche 1 bis 3, wobei die Bremsen-Steuereinheit eigenständig ist und dazu angepasst ist, eine Fahrzeugbremskraft proportional zu dem elektrischen Ausgangssignal aufzubringen.

5. Das Bremsen-Betätigungssystem nach einem der vorhergehenden Ansprüche, wobei die von Hand betätigte Druckplatte (12) betätigt werden kann, ohne das Lenkrad loszulassen.

6. Das Bremsen-Betätigungssystem nach irgend einem der Ansprüche 2 bis 5, wobei die von Hand aktivierte Druckplatte (12) sich um einen Betrag versetzt, der im wesentlichen einem Betrag der Biegung des elastisch biegbaren Elements (46) entspricht.

7. Das Bremsen-Betätigungssystem nach einem der vorhergehenden Ansprüche, wobei das von dem Spannungsprüfsensor (98) erzeugte, elektrische Ausgangssignal im Wesentlichen proportional zu einem Betrag der Biegung des elastisch biegbaren Elements (46) ist.

8. Das Bremsen-Betätigungssystem nach einem der vorhergehenden Ansprüche, wobei das elastisch biegbare Element (46) ein an seinen Enden befestigter Stab ist.

9. Das Bremsen-Betätigungssystem nach Anspruch 8, wobei das Übertragungselement (50) für die örtlich begrenzte Kraft im Wesentlichen auf der Mitte des Stabs (46) wirkt.

10. Ein Verfahren zur Bremsbetätigung für ein Fahrzeug, umfassend die Schritte:
Aufbringen einer Betätigungskraft auf eine auf einem Lenkrad des Fahrzeugs montierte Druckplatte (12); Übertragen der Bremskraft von der Druckplatte (12) auf ein elastisch biegbares Messelement (46) mittels eines Übertragungselements (90) für eine örtlich begrenzte Kraft;
Feststellen einer Biegung des elastisch biegbaren Messelements (46) mit einem daran befestigten Spannungsprüfsensor bzw. Spannungsmessstreifen (98); Bereitstellen eines elektrischen Ausgangssignals von dem Spannungsprüfsensor (98) in proportionaler Antwort auf die Biegung des elastisch biegbaren Messelements (46); und
Übertragen des elektrischen Ausgangssignals direkt auf ein Fahrzeugbremsbetätigungselement.

## Revendications

1. Système de commande de frein (10) de véhicule monté sur le volant, adapté pour être utilisé avec un dispositif de gestion du freinage capable d'accepter des signaux d'entrée électriques et de commander les freins en conséquence, comprenant :
un élément pouvant fléchir de manière élastique (46) monté dans le volant du véhicule, et adapté pour fléchir sous la force d'actionnement ;
un capteur de force électrique (98) fixé à l'élément fléchissant (46) et fournissant un signal de sortie électrique en réponse à la force d'actionnement appliquée,
le signal de sortie électrique fournissant de ce fait une entrée directe au dispositif de gestion du freinage ;
**caractérisé en ce qu'**il comprend en outre une plaque de pression (12) montée sur le volant du véhicule de manière telle que la force d'actionnement peut être appliquée à celle-ci par un utilisateur, et un élément de transmission de force localisée (90) fixé à la plaque de pression (12) et adapté pour transmettre la force de la plaque de pression (12) à l'élément fléchissant (46).

2. Système de commande de frein selon la revendication 1, dans lequel la plaque de pression est une plaque de pression actionnée à la main (12) qui est contiguë à l'élément pouvant fléchir de manière élastique (46).

3. Système de commande de frein selon la revendication 1 ou 2, dans lequel le signal de sortie électrique est substantiellement proportionnel à la force d'actionnement appliquée.

4. Système de commande de frein selon l'une quelconque des revendications 1 à 3, dans lequel le dispositif de gestion du freinage est discret et est adapté pour appliquer une force de freinage du véhicule proportionnelle au signal de sortie électrique.

5. Système de commande de frein selon l'une quelconque des revendications précédentes, dans lequel la plaque de pression actionnée à la main (12) peut être actionnée sans lâcher le volant.

6. Système de commande de frein selon l'une quelconque des revendications 2 à 5, dans lequel la plaque de pression actionnée à la main (12) se déplace sur une distance qui correspond substantiellement à une distance de fléchissement dudit élément pouvant fléchir de manière élastique (46).

7. Système de commande de frein selon l'une quelconque des revendications précédentes, dans lequel le signal de sortie électrique produit par le capteur de force (98) est substantiellement proportionnel à une distance de fléchissement dudit élément pouvant fléchir de manière élastique (46).

8. Système de commande de frein selon l'une quelconque des revendications précédentes, dans lequel l'élément pouvant fléchir de manière élastique (46) est une barre fixée par ses extrémités.

9. Système de commande de frein selon la revendication 8, dans lequel l'élément de transmission de force localisée (90) agit substantiellement au milieu de la barre (46).

10. Procédé d'actionnement de frein pour un véhicule comprenant les étapes consistant à :
exercer une force d'actionnement sur une plaque de pression (12) montée sur un volant du véhicule ;
transmettre la force d'actionnement de la plaque de pression (12) à un élément de mesure pouvant fléchir de manière élastique (46) au moyen d'un élément de transmission de force localisée (90) ;
détecter un fléchissement de l'élément de mesure pouvant fléchir de manière élastique (46) à l'aide d'un capteur de force (98) fixé à ce dernier ;
fournir un signal de sortie électrique provenant du capteur de force (98) en réponse proportionnelle au fléchissement de l'élément de mesure pouvant fléchir de manière élastique (46) ; et
transmettre le signal de sortie électrique directement à un élément de freinage du véhicule.
